# EUROPEAN PATENT SPECIFICATION

(11) **EP 0 376 571 B1**
(45) Date of publication and mention of the grant of the patent: **08.02.1995**
(21) Application number: 89313213.4
(22) Date of filing: 18.12.1989
(51) Int. Cl.: B29C 39/42

(54) **Apparatus and method for producing three-dimensional objects**
Vorrichtung und Verfahren zum Herstellen von dreidimensionalen Gegenständen
Appareil et procédé pour fabriquer des objets tridimensionnels

(30) Priority: 28.12.1988 JP 335429/88
(43) Date of publication of application: 04.07.1990
(73) Proprietor: SONY CORPORATION, Tokyo (JP)
(72) Inventor: Takano, Yoichi, Shinagawa-ku Tokyo (JP); Yamamoto, Masanobu, Shinagawa-ku Tokyo (JP)
(74) Representative: Cotter, Ivan John

(56) References cited:
- EP-A- 0 250 121
- FR-A- 2 583 334
- US-A- 4 575 330

## Description

This invention relates to an apparatus and a method for producing a three-dimensional object.

US Patent No. US-A-4 575 330 discloses an apparatus and method (according to the pre-characterising parts of claims 1 and 11 hereof) for forming a plurality of solidified, thin layers of hardened resin successively by causing each of thin layers of liquid photosetting resin at the surface of a vessel containing the resin to be exposed to a light beam in such a manner that each of the solidified thin layers is superimposed successively on another of the solidified thin layers formed previously so as to make a three-dimensional object of laminated, hardened resin. The intention is, with such an apparatus, that a three-dimensional object having a desired shape can easily be obtained.

In the above apparatus, each layer is moved downward into the resin in the tank when the layer has solidified, so that the solidified layer becomes coated with a new layer of resin to be solidified by the light beam. That is, the liquid photosetting resin is caused to flow of itself at each such stage onto the solidified layer of hardened resin formed previously. The liquid photosetting resin usually has a relatively high viscosity, and therefore a relatively low fluidity, at a normal temperature. Consequently, a relatively long period of time is required for the formation of each thin layer of liquid photosetting resin on the solidified thin layer of previously formed, hardened resin, with the result that many working hours are undesirably spent in production of the three-dimensional object made of laminated, hardened resin.

Such a problem encountered with the previously proposed apparatus as described above has been stated in the specification of Japanese Patent Application Publication number JP-A-61 114 817. However, it seems that measures to eliminate this problem safely and with reduced cost have not been previously proposed.

This invention seeks to overcome, in an apparatus and method of the kind outlined above, the problem of slow operation mentioned above.

French Patent Application Publication No. FR-A-2 583 334 discloses another technique for producing three-dimensional objects which makes use of a photosetting liquid. However, this technique is different from that with which US-A-4 575 330 and the invention are concerned. According to the technique of FR-A-2 583 334, there is no formation of layers at the surface of photosetting liquid contained in a vessel. Instead, the photosetting liquid ("first liquid") is supplied from a vessel containing same, via a flexible hose, to an injector which is disposed below the surface of a tank containing a second liquid. The injector is moved to dispense the first liquid into the second liquid (below the surface thereof) in such a manner as to conform to a desired pattern. The first liquid is solidified, by illumination from above the surface of the second liquid, after it is dispensed from the injector whereby a layer of the component is built up. The shape of the layer is thus determined by the pattern of movement of the injector rather than by the light beam.

FR-A-2 583 334 discloses the possibility of controlling the temperature of the second liquid (that in the tank thereof) to a fixed, predetermined value, so as to maintain the second liquid perfectly still and avoid thermal convection phenomena which could provoke undesirable mixing of the injected first liquid (the photosetting liquid) with the second liquid in the tank outside of the solidification zones.

European Patent Application Publication No. EP-A-0 250 121 discloses another apparatus and method for producing a three-dimensional object by illuminating a photosetting liquid.

According to a first aspect of the invention there is provided an apparatus for producing a three-dimensional object, the apparatus comprising a vessel for storing liquid photosetting resin, light beam generating means for applying a light beam to successive layers of the liquid photosetting resin, each of which includes the upper surface of the liquid photosetting resin stored in the vessel, so as to change each layer of the liquid photosetting liquid into a solidified layer of hardened resin, and movable means for moving each successively solidified layer of hardened resin downward into the liquid photosetting resin stored in the vessel so that each solidified layer of hardened resin is coated with a new layer of the liquid photosetting resin which is then exposed to the light beam from the light beam generating means so as to form a new solidified layer of hardened resin fixedly superimposed on the solidified layer positioned in the liquid photosetting resin to make a three-dimensional object of laminated, hardened resin, characterized by a temperature sensing means for detecting the temperature of the liquid photosetting resin stored in the vessel and producing a detection output, heating means for heating the liquid photosetting resin stored in the vessel, and temperature control means for controlling the heating means based on the detection output obtained from the temperature sensing means so as to reduce the viscosity of the liquid photosetting resin stored in the vessel.

According to a second aspect of the invention there is provided a method for producing a three-dimensional object of hardened resin from liquid photosetting resin stored in a vessel, the method comprising the steps of applying a light beam to successive layers of the liquid photosetting resin each of which includes the upper surface of the liquid photosetting resin stored in the vessel so as to change each layer of the liquid photosetting resin into a solidified layer of hardened resin, and moving each successively solidified layer of hardened resin downward into the liquid photosetting resin stored in the vessel so that each solidified layer of hardened resin is coated with a new layer of the liquid photosetting resin which is then exposed to the light beam, so as to form a new solidified layer of hardened resin fixedly superimposed on the solidified layer positioned in the liquid photosetting resin to make a three-dimensional object of laminated hardened resin, characterized by the steps of detecting the temperature of the liquid photosetting resin stored in the vessel and producing a detection output signal, and heating the liquid photosetting resin stored in the vessel as a function of the temperature detection output signal so as to reduce the viscosity of the liquid photosetting resin stored in the vessel.

In the apparatus and method thus constituted in accordance with the invention, the liquid photosetting resin stored in the vessel is heated so that the temperature of the resin is raised and thereby becomes more fluid (less viscous). Accordingly, when a solidified layer of hardened resin is moved downward into the liquid photosetting resin stored in the vessel, the liquid photosetting resin stored in the vessel flows quickly onto and coats the solidified layer of hardened resin. Also, the layer of the liquid photosetting resin at the surface of the liquid photosetting resin stored in the vessel is renewed due to the stirring action of the immersion of the solidified resin object. This results in a layer of the liquid photosetting resin with a flat surface being coated on the previously formed solidified layer of hardened resin within a relatively short time whenever a solidified layer is moved downward into the liquid photosetting resin stored in the vessel. Therefore, the time spent in producing the three-dimensional object made of laminated, hardened resin is effectively reduced.

Preferably, the heating means is arranged to cause the liquid photosetting resin stored in the vessel to be subjected to high frequency induction heating and therefore the temperature of the liquid photosetting resin can be safely raised with easily controllable and inexpensive heating arrangements.

The invention will now be further described, by way of illustrative and non-limiting example, with reference to the accompanying drawings, in which:
Fig. 1 is a partly fragmental, schematic perspective illustration showing apparatus according to a first embodiment of the invention for producing a three-dimensional object;
Fig. 2 is a partly fragmental, schematic, front view of a part of the embodiment shown in Fig. 1;
Fig. 3 is a schematic block diagram showing a control system employed in the embodiment shown in Fig. 1;
Fig. 4 is an exploded perspective view showing an example of a three-dimensional object produced by the embodiment shown in Fig. 1; and
Fig. 5 is a partly fragmental, schematic front view of apparatus according to a second embodiment of the invention for producing a three-dimensional object.

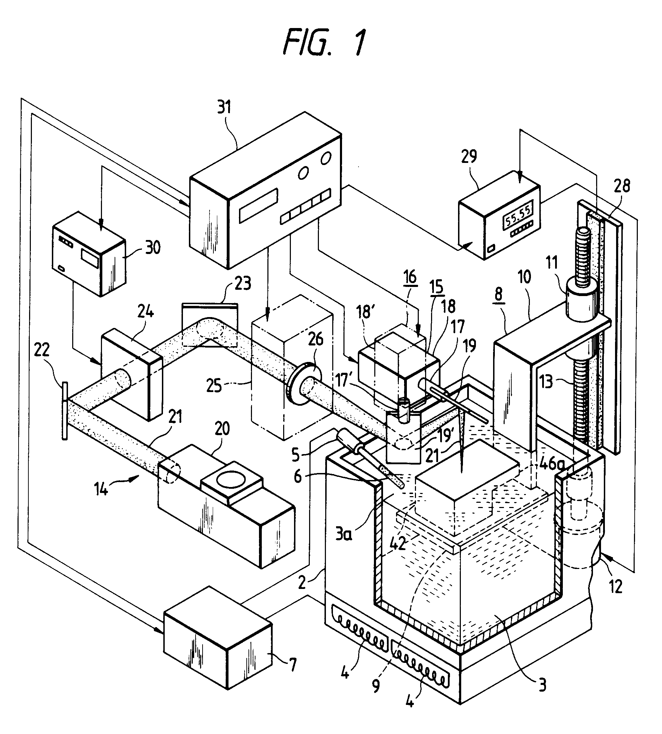

Figs. 1 to 3 show apparatus according to a first embodiment of the invention, the apparatus having a vessel 2 in which liquid photosetting resin 3 is stored. The vessel 2 is made in its entirety of electrically conductive material or made of both insulating material and electrically conductive material in such a manner, for example, that a main body of the vessel 2 is made of insulating material and the whole or a part of the outer and inner surfaces is covered by a thin layer of metallic material, such as aluminum.

The liquid photosetting resin 3 is required to be solidified by exposure to a light beam and also to be hardened on the previously solidified resin. A suitable resin can be selected from the group including ultraviolet-ray-setting denatured acrylate, denatured polyurethane methacryl, oligoethyl acrylate, urethane acrylate, epoxy acrylate, and photosensitive polyimide.

The vessel 2 is provided at its bottom portion with a heating arrangement comprising a plurality of coils 4 for high frequency induction heating. When a high frequency current is supplied to the coils 4, magnetic fluxes from the coils 4 act on a portion of the vessel 2 made of electrically conductive material so that an eddy current is produced therein by means of electromagnetic induction. Consequently, the vessel 2 generates Joule heat caused by eddy current loss in the portion of the vessel 2 made of electrically conductive material and thereby the liquid photosetting resin 3 stored in the vessel 2 is heated to have reduced viscosity.

In the case where the vessel 2 or its inner or outer surfaces are made entirely of electrically conductive material, the coils 4 for high frequency induction heating can be disposed at any position close to the inner or outer surface of the vessel 2. Further, it is possible to provide a wall made of insulating material between the coils 4 and the vessel 2 so as to form an explosion-proof bulkhead isolating the coils 4 from the liquid photosetting resin 3.

The embodiment also has a temperature sensor 5 for detecting the temperature of the liquid photosetting resin 3 stored in the vessel 2 and producing a detection output signal representing the detected temperature. The temperature sensor 5 is mounted on the vessel 2 and provided with a sensing probe 6 immersed in the liquid photosetting resin 3 at its surface 3a.

The detection output signal obtained from the temperature sensor 5 is supplied to a temperature controller 7 connected to the coils 4 for high frequency induction heating. The temperature controller 7 is operative to control the high frequency current supplied to the coils 4. By this means the high frequency induction heating to the vessel 2 is carried out in response to the detection output signal from the temperature sensor 5 so as to cause the liquid photosetting resin 3 stored in the vessel 2 to be heated at a predetermined desirable temperature.

The temperature controller 7 is operative also to send a command signal to an operation controller 31, which is described in detail later, for preventing the three-dimensional object producing process from being started when the surface temperature of the liquid photosetting resin 3 is lower than a predetermined lower limit and for causing the process to stop when the surface temperature of the liquid photosetting resin 3 is higher than a predetermined upper limit.

Accordingly, the three-dimensional object producing operation is controlled by the operation controller 31 so as not to be started before the liquid photosetting resin 3 stored in the vessel 2 comes to have its viscosity lower than a predetermined relatively low value and the apparatus is prevented from becoming uncontrollable when the temperature of the liquid photosetting resin 3 at its surface 3a is excessively increased for some abnormal reason.

A temperature range including the predetermined lower limit and the predetermined upper limit is determined in accordance with temperature characteristic in viscosity of the liquid photosetting resin 3. In the case where the ultraviolet-ray-setting denatured acrylate is used as the liquid photosetting resin 3, the temperature range is selected to be about 30°C to 50°C.

An elevating device 8 which has an upper plate portion 10 provided with a fixed nut 11 engaging with a screw shaft 13 is positioned alongside the vessel 2. The screw shaft 13 is driven to rotate by a stepping motor 12 and therefore the elevating device 8 is moved up and down selectively step by step with a predetermined pitch along the screw shaft 13. Attached to the upper plate 10 is a lower, plate-like stage 9 which can be immersed into the liquid photosetting resin 3 stored in the vessel 2 selectively, step by step with the predetermined pitch in accordance with the movements of the elevating device 8.

The elevating device 8 also has a position sensor 28 extending along the screw shaft 13. The position sensor 28 is operative to detect positions of the elevating device 8 in the vertical direction and to produce a detection output signal representing the detected position. The detection output signal obtained from the position sensor 28 is supplied to an elevating device controller 29 which controls the rotation of the stepping motor 12 in accordance with the detection output signal from the position sensor 28 so that the position of the elevating device 8 in the vertical direction is controlled.

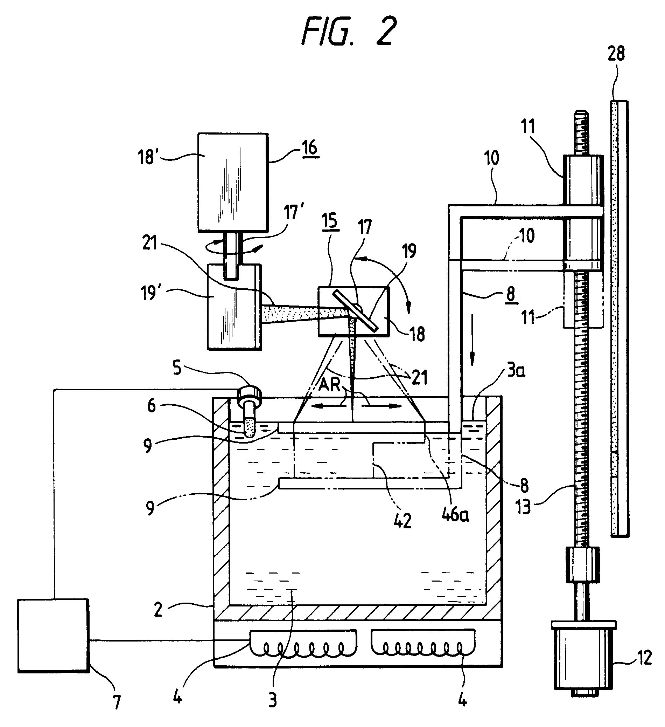

Further, an optical arrangement 14 for generating and swinging a light beam, which includes a light beam source 20 and light beam scanners 15 and 16, is provided. The light beam scanner 15 comprises a shaft 17, extending horizontally and driven to rotate by a mirror driver 18, and a mirror 19 mounted at the end of the shaft 17 for causing a light beam 21 generated by the light beam source 20 to scan the surface 3a of the liquid photosetting resin 3 stored in the vessel 2 in a first scanning direction indicated by arrows AR in Fig. 2. The light beam scanner 16 comprises a vertically extending shaft 17′, driven to rotate by a mirror driver 18′, and a mirror 19′ mounted on the end of the shaft 17′ for causing the light beam 21 to scan the surface 3a of the liquid photosetting resin 3 stored in the vessel 2 in a second scanning direction perpendicular to the first scanning direction in a horizontal plane. The rotating mirror 19 is disposed just above the plate-like stage 9 in the liquid photosetting resin 3 stored in the vessel 2.

The light beam source 20 comprises, for example, an argon laser for generating a laser light beam with a wavelength of 360 nanometers or a helium-neon laser for generating a laser light beam with a wavelength of 325 nanometers. The light beam 21 generated by the light beam source 20 is reflected by a mirror 22 to pass through an acoustooptic modulator 24 and is reflected further by a mirror 23 to be incident through a focusing device 25, having a focus lens 26, upon the rotating mirror 19′ of the light beam scanner 16. The light beam 21 is directed to the mirror 19 of the scanner 15 which causes the beam 21 to be incident upon the surface 3a of the liquid photosetting resin 3 stored in the vessel 2. The light beam 21 scans the resin surface by the movements of the rotating mirror 19′ of the light beam scanner 16 and the rotating mirror 19 of the light beam scanner 15.

The acoustooptic modulator 24 is operative to modulate the intensity of the light beam impinging upon the mirror 23 in accordance with a modulating signal supplied thereto and the focusing device 25 is operative to focus the light beam on the surface 3a of the liquid photosetting resin 3 stored in the vessel 2.

With such an optical arrangement 14, a partial area of the surface 3a of the liquid photosetting resin 3 stored in the vessel 2, which is spreading below the rotating mirror 19, is scanned by the light beam 21 reduced in size to a beam spot of a predetermined small size in both of the first and second scanning directions which are perpendicular to each other.

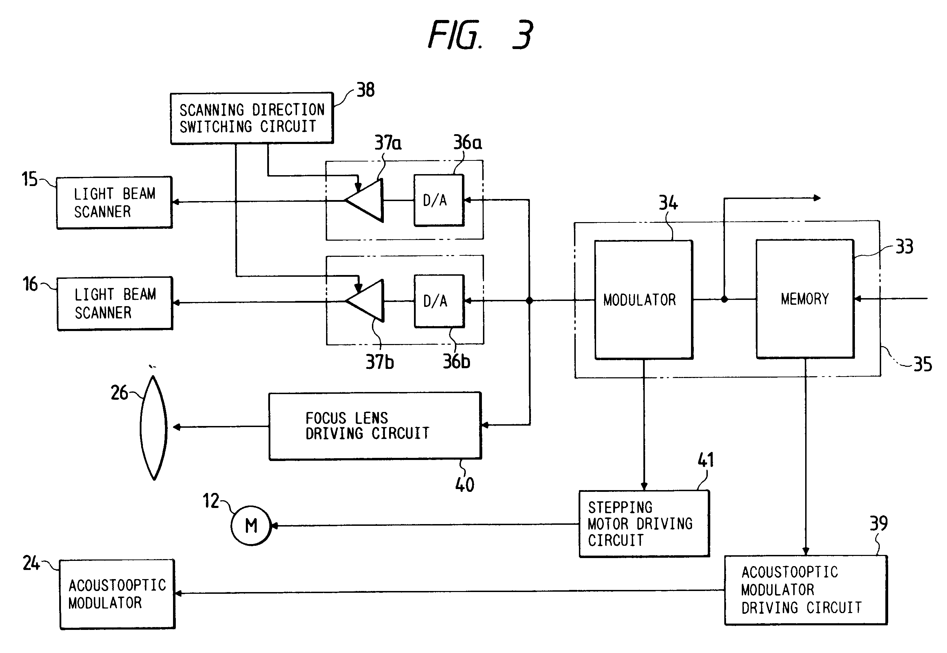

The operation controller 31 is operative to control each of the light beam scanners 15 and 16, the focusing device 25, the elevating device controller 29, and a modulating signal generator 30 for supplying the acoustooptic modulator 24 with the modulating signal. A control system including the operation controller 31, light beam scanners 15 and 16, focusing device 25, elevating device controller 29 and modulating signal generator 30 is shown in Fig. 3 in the form of a block diagram.

Referring to Fig. 3, a beam position control circuit 35 including a memory 33 and a modulator 34 is provided. The memory 33 is connected with a designing device, e.g. a computer operating with computer aided design software, for programming data for producing a plurality of horizontally sliced pieces of a three-dimensional object so that the data programmed by the designing device is temporarily stored in the memory 33. The modulator 34 is operative to convert the data of each of the horizontally sliced pieces of the three-dimensional object, which is read from the memory 33, into coordinate data representing positions on each of the horizontally sliced pieces of the three-dimensional object in the first and second scanning directions, respectively. The coordinate data obtained from the modulator 34 is supplied to each of two digital to analog (D/A) converters 36a and 36b and a focus lens driving circuit 40.

The D/A converter 36a converts the coordinate data from the modulator 34 into a first scanning signal corresponding to successive positions on each of a plurality of first parallel lines extending in the first scanning direction on each of the horizontally sliced pieces of the three-dimensional object and a second scanning signal corresponding to successive positions on each of a plurality of second parallel lines extending in the second scanning direction on each of the horizontally sliced pieces of the three-dimensional object. The first and second scanning signals obtained from the D/A converter 36a are supplied to a gate 37a by which the first scanning signal or the second scanning signal is selected to pass therethrough to the mirror driver 18 of the light beam scanner 15.

The D/A converter 36b converts the coordinate data from the modulator 34 into a third scanning signal corresponding to positions of the first parallel lines on each of the horizontally sliced pieces of the three-dimensional object in the second scanning direction and a fourth scanning signal corresponding to positions of the second parallel lines on each of the horizontally sliced pieces of the three-dimensional object in the first scanning direction. The third and fourth scanning signals obtained from the D/A converter 36b are supplied to a gate 37b by which the third scanning signal or the fourth scanning signal is selected to pass therethrough to the mirror driver 18′ of the light beam scanner 16.

In summary, the first scanning signal represents positional information along the first parallel lines, the second scanning signal represents positional information along the second parallel lines, the third scanning signal represents the positions of the first line in the second scanning direction and the fourth scanning signal represents the positions of the second scanning lines in the first scanning direction.

The gates 37a and 37b are controlled by a scanning direction switching circuit 38 so as to alternately be in a first state wherein the first scanning signal is selected by the gate 37a and the third scanning signal is selected by the gate 37b and in a second state wherein the second scanning signal is selected by the gate 37a and the fourth scanning signal is selected by the gate 37b. This switching takes place for each period of time in which the coordinate data of each horizontally sliced piece of the three-dimensional object are read from the memory 33.

Therefore, the light beam 21 is caused by the rotating mirrors 19 and 19′ to be incident upon the resin surface 3a. Alternately during each period of time wherein the coordinate data of each horizontally sliced piece of the three-dimensional object are obtained from the modulator 34, the light beam 21 repeatedly performs a first line scanning in the first scanning direction or a second line scanning in the second scanning direction all over the partial area of the resin surface 3a.

The focus lens driving circuit 40 is operative to cause the focusing device 25 to control the position of the focus lens 26 so as to focus the light beam 21 upon the resin surface 3a in response to the coordinate data obtained from the modulator 34.

The programmed data read from the memory 33 are also supplied to an acoustooptic modulator driving circuit 39. The acoustooptic modulator driving circuit 39 is operative to control the modulating signal generator 30 to produce a modulating signal which varies in response to the programmed data representing each of the first or second parallel lines on each of the horizontally sliced pieces of the three-dimensional object.

Further, the coordinate data obtained from the modulator 34 is also supplied to a stepping motor driving circuit 41. The stepping motor driving circuit 41 is operative to control the elevating device controller 29 to drive the stepping motor 12 in such a manner that the elevating device 8 is moved to put the plate-like stage 9 at a position lower by one stepping pitch from the resin surface 3a (this position is referred to as an initial position) so that a thin layer of the liquid photosetting resin 3 is provided on the plate-like stage 9 at the beginning of the three-dimensional object producing operation. Thereafter the elevating device 8 is moved down to descend the plate-like stage 9 by one stepping pitch whenever the coordinate data of each horizontally sliced piece of the three-dimensional object has been completely obtained from the modulator 34.

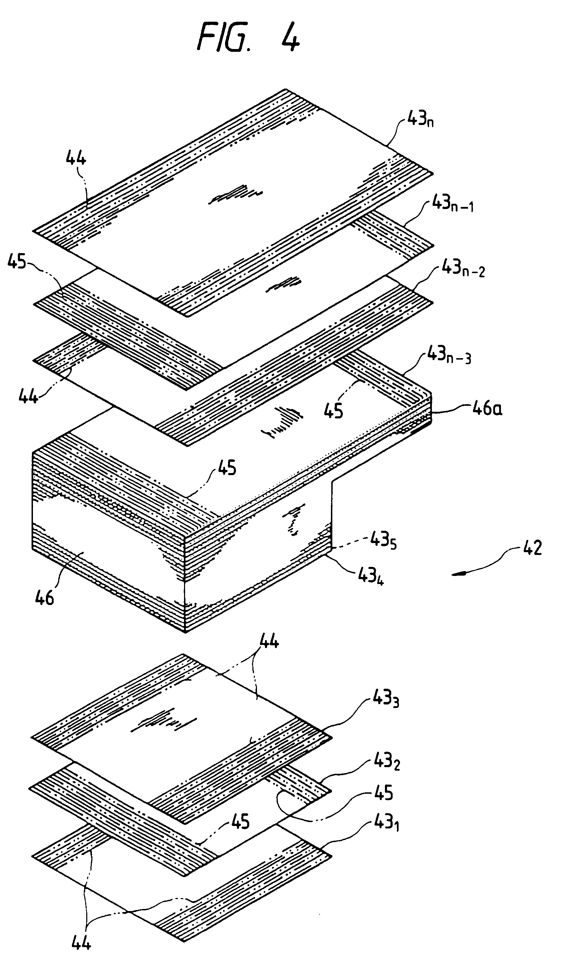

With the embodiment described above, a three-dimensional object 42 shown in the exploded form in Fig. 4 is produced through the processes as will now be explained.

First, an operation starting signal is supplied to the operation controller 31. If the temperature of the liquid photosetting resin 3 at its surface 3a is lower than the predetermined lower limit, the three-dimensional object producing operation is not started regardless of the supply of the operation starting signal to the operation controller 31 and the high frequency current is supplied to the coils 4 for high frequency induction heating in order to cause the vessel 2 to be subjected to high frequency induction heating and thereby to heat the liquid photosetting resin 3.

When it is detected by the temperature sensor 5 that the temperature of the liquid photosetting resin 3 at its surface 3a has become equal to or higher than the predetermined lower limit, the temperature controller 7 operates to cause the operation controller 31 to start the three-dimensional object producing operation. The elevating device 8 is moved to put the plate-like stage 9 at the initial position and the first thin layer of the liquid photosetting resin 3 is provided on the plate-like stage 9.

Then, the light beam 21 caused by the rotating mirrors 19 and 19′ to be incident upon the resin surface 3a begins the first line scanning in the first scanning direction on the first thin layer of the liquid photosetting resin 3 provided on the plate-like stage 9 repeatedly all over the surface of the first thin layer of the liquid photosetting resin 3. This first scanning takes place during a period of time in which the coordinate data of the first horizontally sliced piece of the three-dimensional object 42 is obtained from the modulator 34. In this way the first thin layer of the liquid photosetting resin 3 on the plate-like stage 9 is hardened to form a solidified layer of hardened resin. As a result of this, the first solidified layer 43₁ as shown in Fig. 4 is formed in the liquid photosetting resin 3. In Fig. 4, dot-dash lines 44 indicate the first line scannings by the light beam 21.

After the first solidified layer 43₁ has been formed, the elevating device 8 is moved down to descend the plate-like stage 9 by one stepping pitch so that the first solidified layer 43₁ formed on the plate-like stage 9 is moved downward into the liquid photosetting resin 3 and a second thin layer of the liquid photosetting resin 3 covers the first solidified layer 43₁. Since the vessel 2 is subjected to the high frequency induction heating so as to keep the liquid photosetting resin 3 at the predetermined temperature so that the viscosity is sufficiently reduced, the liquid photosetting resin 3 quickly flows onto the first solidified layer 43₁ to form the second thin layer of the liquid photosetting resin 3.

Then, the light beam 21 caused by the rotating mirrors 19 and 19′ to be incident upon the resin surface 3a repeatedly perform the second line scanning in the second scanning direction on the second thin layer of the liquid photosetting resin 3 provided on the first solidified layer 43₁ all over the surface of the second thin layer of the liquid photosetting resin 3. This is done during a period of time in which the coordinate data of the second horizontally sliced piece of the three-dimensional object 42 is obtained from the modulator 34. In this manner the second thin layer of the liquid photosetting resin 3 provided on the first solidified layer 43₁ is hardened to form a new solidified layer of hardened resin fixedly superimposed on the first solidified layer 43₁. Accordingly, a second solidified layer 43₂ as shown in Fig. 4 is formed to be fixedly superimposed on the first solidified layer 43₁ in the liquid photosetting resin 3. In Fig. 4, dot-dash lines 45 indicate the second line scannings by the light beam 21.

Further, after the second solidified layer 43₂ has been formed, the elevating device 8 is moved down again to descend the plate-like stage 9 by one stepping pitch so that the first and second solidified layers 43₁ and 43₂ formed on the plate-like stage 9 are moved downward into the liquid photosetting resin 3 and a third thin layer of the liquid photosetting resin 3 coats the second solidified layer 43₂.

After that, the light beam 21 caused by the rotating mirrors 19 and 19′ to be incident upon the resin surface 3a repeatedly performs the first line scanning in the first scanning direction on the third thin layer of the liquid photosetting resin 3 provided on the second solidified layer 43₂ all over the surface of the third thin layer of the liquid photosetting resin 3. This is accomplished during a period of time in which the coordinate data of the third horizontally sliced piece of the three-dimensional object is obtained from the modulator 34. The foregoing steps are repeated until the last solidified layer 43ₙ as shown in Fig. 4 is formed.

Through the processes described above, the first to last solidified layers 43₁, 43₂, 43₃, 43₄, 43₅, - - - - - 43ₙ₋₃, 43ₙ₋₂, 43ₙ₋₁ and 43ₙ are integrally formed in a stack as shown in Fig. 4 and thereby the three-dimensional object 42 which is made of laminated, hardened resin is obtained.

Since the odd-numbered solidified layers (43₁, 43₃, 43₅, - - - ) are formed with the first beam scanning in the first scanning direction and the even-numbered solidified layers (43₂, 43₄, 43₆, - - -) are formed with the second beam scanning in the second scanning direction perpendicular to the first scanning direction, the surface of a side portion 46 is smoothly formed and further bending deformations of the respective solidified layers resulting from volume contractions caused during solidification are not uniform in direction so that even a projecting portion 46a is prevented from bending badly.

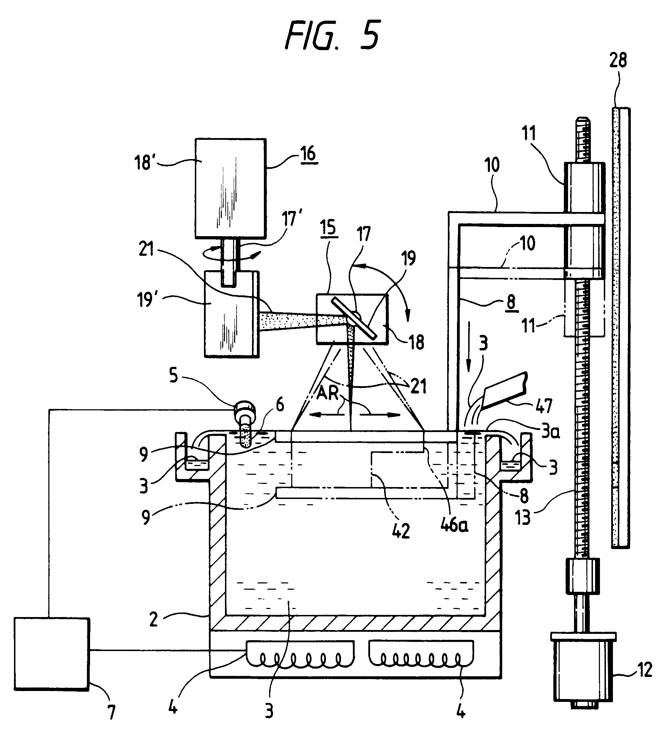

Fig. 5 shows another embodiment of apparatus for producing a three-dimensional object according to the present invention. In Fig. 5, the devices, members and portions corresponding to those of Fig. 2 are marked with the same references and further description thereof will be omitted.

In the embodiment shown in Fig. 5, the liquid photosetting resin 3 is supplemented from a resin reservoir 47 provided on the vessel 2 to supply resin to or store resin overflow from the vessel 2 to allow for volume contraction of the liquid photosetting resin 3 resulting from solidification of the liquid photosetting resin 3 on the plate-like stage 9.

In the case of the embodiment shown in Fig. 5, the resin surface 3a is kept at a constant level regardless of volume contraction of the liquid photosetting resin 3 resulting from solidification of the liquid photosetting resin 3 on the plate-like stage 9. This results in the advantages that the control of the elevating device 8 for positioning the plate-like stage 9 properly in the liquid photosetting resin 3 is easily carried out and the temperature of the liquid photosetting resin 3 is accurately detected by the temperature sensor 5.

## Claims

1. An apparatus for producing a three-dimensional object, the apparatus comprising a vessel (2) for storing liquid photosetting resin (3), light beam generating means (14) for applying a light beam (21) to successive layers of the liquid photosetting resin (3), each of which includes the upper surface of the liquid photosetting resin (3) stored in the vessel (2), so as to change each layer of the liquid photosetting resin (3) into a solidified layer of hardened resin, and movable means (8, 28) for moving each successively solidified layer of hardened resin downward into the liquid photosetting resin (3) stored in the vessel (2) so that each solidified layer of hardened resin is coated with a new layer of the liquid photosetting resin (3) which is then exposed to the light beam (21) from the light beam generating means (14) so as to form a new solidified layer of hardened resin fixedly superimposed on the solidified layer positioned in the liquid photosetting resin (3) to make a three-dimensional object (42) of laminated, hardened resin, characterized by temperature sensing means (5) for detecting the temperature of the liquid photosetting resin (3) stored in the vessel (2) and producing a detection output, heating means (4) for heating the liquid photosetting resin (3) stored in the vessel (2), and temperature control means (7) for controlling the heating means (4) based on the detection output obtained from the temperature sensing means (5) so as to reduce the viscosity of the liquid photosetting resin (3) stored in the vessel (2).

2. An apparatus according to claim 1, wherein the vessel (2) is made at least partially of electrically conductive material.

3. An apparatus according to claim 2, wherein the heating means (4) comprises high frequency induction heating means, including coils, by which an eddy current is produced through electromagnetic induction to flow in the electrically conductive material so as to cause the electrically conductive material to generate Joule heat.

4. An apparatus according to claim 1, claim 2 or claim 3, wherein the temperature sensing means (5) is mounted on the vessel (2) and provided with a sensing portion (6) immersed in the liquid photosetting resin (3) stored in the vessel (2).

5. An apparatus according to any one of the preceding claims, wherein operation control means (31) is provided for controlling the movable means (8) and the temperature control means (7) is operative to control the operation control means (31) to prevent a three-dimensional object producing operation from being started when the temperature of the liquid photosetting resin (3) stored in the vessel (2) is lower than a predetermined lower limit and to stop the three-dimensional object producing operation when the temperature of the liquid photosetting resin (3) stored in the vessel (2) is higher than a predetermined upper limit.

6. An apparatus according to any one of the preceding claims, wherein the light beam generating means (14) comprises a light beam source (20) for producing a laser light beam, a light beam controller (24) for controlling the intensity of the laser light beam, a focusing device (25) provided with a focus lens (26) for focusing the laser light beam to have a predetermined beam spot on the surface of the liquid photosetting resin (3) stored in the vessel (2), a first light beam scanner (16) including a first movable mirror (19') for causing the light beam to scan the surface of the liquid photosetting resin (3) stored in the vessel (2) in a first scanning direction, a second light beam scanner (15) including a second movable mirror (19) for causing the light beam to scan the surface of the liquid photosetting resin (3) stored in the vessel (2) in a second scanning direction perpendicular to the first scanning direction, and deflection means (22, 23) for causing the laser light beam to be incident upon the first and second rotating mirrors along a predetermined path.

7. An apparatus according to any one of the preceding claims, wherein the movable means (8, 28) comprises an elevating device (8) having a portion movable up and down selectively in the liquid photosetting resin (3) stored in the vessel (2).

8. An apparatus according to claim 7, wherein the elevating device (8) comprises a plate-like stage (9) which is immersible in the liquid photosetting resin (3) stored in the vessel (2), for supporting the solidified layer of hardened resin, and a stepping motor (12) for moving the plate-like stage (9) upward and downward selectively step by step with a predetermined pitch.

9. An apparatus according to claim 8, wherein the movable means (8, 28) further comprises a position sensor (28) for detecting the position of the elevating device (8) in a vertical direction relative to the upper surface of the resin and producing a positional detection output signal, and an elevating device controller (29) operative to control the stepping motor (12) in accordance with the positional detection output signal from the position sensor (28).

10. An apparatus according to any one of the preceding claims, comprising resin supplying means (47) for supplementing the liquid photosetting resin (3) in the vessel (2) so as to keep the surface of the liquid photosetting resin (3) stored in the vessel (2) at a constant level.

11. A method for producing a three-dimensional object of hardened resin from liquid photosetting resin (3) stored in a vessel (2), the method comprising the steps of applying a light beam (21) to successive layers of the liquid photosetting resin (3) each of which includes the upper surface of the liquid photosetting resin stored in the vessel (2) so as to change each layer of the liquid photosetting resin (3) into a solidified layer of hardened resin, and moving each successively solidified layer of hardened resin downward into the liquid photosetting resin (3) stored in the vessel (2) so that each solidified layer of hardened resin is coated with a new layer of the liquid photosetting resin (3) which is then exposed to the light beam (21), so as to form a new solidified layer of hardened resin fixedly superimposed on the solidified layer positioned in the liquid photosetting resin (3) to make a three-dimensional object (42) of laminated hardened resin, characterized by the steps of detecting the temperature of the liquid photosetting resin (3) stored in the vessel (2) and producing a detection output signal, and heating the liquid photosetting resin (3) stored in the vessel (2) as a function of the temperature detection output signal so as to reduce the viscosity of the liquid photosetting resin (3) stored in the vessel (2).

12. A method according to claim 11, wherein the vessel (2) includes electrically conductive material and the heating step comprises high frequency induction heating of the electrically conductive material to cause an eddy current to be produced therein through electromagnetic induction so as to cause the electrically conductive material to generate Joule heat.

13. A method according to claim 11 or claim 12, wherein the step of detecting the resin's temperature comprises detecting it at the upper surface of the resin (3) in the vessel (2).

14. A method according to claim 11, claim 12 or claim 13, wherein the light beam applying step comprises the steps of producing a laser light beam (21), controlling the intensity of the laser light beam (21), focusing the laser light beam (21) to have a predetermined beam spot on the surface of the liquid photosetting resin stored in the vessel (2), and causing the light beam (21) to scan the surface of the liquid photosetting resin (3) stored in the vessel (2) in a first scanning direction and then in a second scanning direction perpendicular to the first scanning direction.

15. A method according to any one of claims 11 to 14, comprising the step of supplementing the liquid photosetting resin (3) in the vessel (2) so as to keep the surface of the liquid photosetting (3) resin stored in the vessel (2) at a constant level.

## Patentansprüche

1. Vorrichtung zur Herstellung eines dreidimensionalen Objekts mit
einem Behälter (2) zur Speicherung von flüssigem photohärtendem Harz (3),
einer Lichtstrahlerzeugungseinrichtung (14) zum Applizieren eines Lichtstrahls (21) auf aufeinanderfolgende Schichten des flüssigen photohärtenden Harzes (3), um jede Schicht des flüssigen photohärtenden Harzes (3) in eine verfestigte Schicht aus gehärtetem Hart umzuwandeln, wobei diese Schichten jeweils die Oberseite des in dem Behälter (2) gespeicherten flüssigen photohärtenden Harzes (3) enthalten, und
einer beweglichen Einrichtung (8, 28) zum Bewegen der einzelnen nacheinander verfestigten Schichten aus gehärtetem Hart nach unten in das in dem Behälter (2) gespeicherte flüssige photohärtende Harz (3), so daß jede verfestigte Schicht aus gehärtetem Hart mit einer neuen Schicht des flüssigen photohärtenden Harzes (3) bedeckt wird, die dann dem Lichtstrahl (21) aus der Lichtstrahlerzeugungseinrichtung (14) ausgesetzt wird, um eine neue verfestigte Schicht aus gehärtetem Harz zu bilden, die auf der in dem flüssigen photohärtenden Harz (3) liegende verfestigte Schicht fest aufgelagert ist, um ein dreidimensionales Objekt (42) aus laminiertem gehärtetem Harz herzustellen,
**gekennzeichnet durch**
eine Temperatursensoreinrichtung (5) zum Detektieren der Temperatur des in dem Behälter (2) gespeicherten flüssigen photohärtenden Harzes (3) und zur Erzeugung eines Detektorausgangssignals,
eine Heizeinrichtung (4) zum Erwärmen des in dem Behälter (2) gespeicherten flüssigen photohärtenden Harzes (3) ,
eine Temperatursteuereinrichtung (7) zur Steuerung der Heizeinrichtung (4) auf der Basis des Detektorausgangssignals der Temperatursensoreinrichtung (5), um die Viskosität des in dem Behälter (2) gespeicherten flüssigen photohärtenden Harzes (3) herabzusetzen.

2. Vorrichtung nach Anspruch 1, bei der der Behälter (2) zumindest teilweise aus elektrisch leitfähigem Material besteht.

3. Vorrichtung nach Anspruch 2, bei der die Heizeinrichtung (4) eine Hochfrequenz-Induktionsheizeinrichtung umfaßt, die Spulen aufweist, mit deren Hilfe durch elektromagnetische Induktion ein in dem elektrisch leitfähigen Material fließender Wirbelstrom erzeugt wird, der in diesem die Erzeugung von Joulscher Wärme bewirkt.

4. Vorrichtung nach Anspruch 1, 2 oder 3, bei der die Temperatursensoreinrichtung (5) an dem Behälter (2) montiert ist und einen Sensorteil (6) aufweist, der in das in dem Behälter (2) gespeicherte flüssige photohärtende Harz (3) eintaucht.

5. Vorrichtung nach einem der vorhergehenden Ansprüche, bei der eine Ablaufsteuereinrichtung (31) zur Steuerung der beweglichen Einrichtung (8) vorgesehen ist, die von der Temperatursteuereinrichtung (7) so gesteuert wird, daß der Beginn der Herstellung eines dreidimensionalen Objekts verhindert wird, wenn die Temperatur in dem Behälter (2) gespeicherten flüssigen photohärtenden Harzes (3) unter einem vorbestimmten unteren Grenzwert liegt, und die Herstellung eines dreidimensionalen Objekts gestoppt wird, wenn die Temperatur in dem Behälter (2) gespeicherten flüssigen photohärtenden Harzes (3) über einem vorbestimmten oberen Grenzwert liegt.

6. Vorrichtung nach einem der vorhergehenden Ansprüche, bei der die Lichtstrahlerzeugungseinrichtung (14) aufweist:
eine Lichtquelle (20) zur Erzeugung eines Laserlichtstrahls,
eine Lichtstrahlsteuerung (24) zur Steuerung der Intensität des Laserlichtstrahls,
ein mit einer Fokussierungslinse (26) ausgestattete Fokussierungseinrichtung (25) zum Fokussieren des Laserlichtstrahls derart, daß dieser auf der Oberfläche des in dem Behälter (2) gespeicherten flüssigen photohärtenden Harzes (3) einen vorbestimmten Strahlpunkt bildet,
einen ersten Lichtstrahlabstaster (16) mit einem ersten beweglichen Spiegel (19'), durch den der Lichtstrahl so beeinflußbar ist, daß die Oberfläche des in dem Behälter (2) gespeicherten flüssigen photohärtenden Harzes (3) in einer ersten Abtastrichtung abtastet,
einen zweiten Lichtstrahlabstaster (15) mit einem zweiten beweglichen Spiegel (19), durch den der Lichtstrahl so beeinflußbar ist, daß die Oberfläche des in dem Behälter (2) gespeicherten flüssigen photohärtenden Harzes (3) in einer zweiten Abtastrichtung abtastet,
und Ablenkmittel (20, 23), die bewirken, daß der Laserlichtstrahl entlang einem vorbestimmten Pfad auf den ersten und den zweiten beweglichen Spiegel auftrifft.

7. Vorrichtung nach einem der vorhergehenden Ansprüche, bei der die bewegliche Einrichtung (8) eine Hebevorrichtung (8) umfaßt mit einem Teil, der wahlweise in dem in dem Behälter (2) gespeicherten flüssigen photohärtenden Harz (3) aufwärts und abwärts bewegt werden kann.

8. Vorrichtung nach Anspruch 7, bei der die Hebevorrichtung (8) eine in das in dem Behälter (2) gespeicherte flüssige photohärtende Harz (3) eintauchbare plattenförmige Stufe (9) zur Unterstützung der verfestigten Schicht aus gehärtetem Harz aufweist sowie einen Schrittmotor (12), mit dessen Hilfe die plattenförmige Stufe (9) schrittweise mit einer bestimmten Schrittweite wahlweise aufwärts und abwärts bewegt werden kann.

9. Vorrichtung nach Anspruch 8, bei der die bewegliche Einrichtung (8, 28) außerdem einen Positionssensor (28) zur Detektierung der Position der Hebevorrichtung (8) in vertikaler Richtung relativ zu der Oberseite des Harzes und zur Erzeugung eines Positionsdetektorausgangssignals sowie eine Hebevorrichtungssteuerung (29) aufweist, die den Schrittmotor (12) nach Maßgabe des von dem Positionssensor (28) abgegebenen Ausgangssignals steuert.

10. Vorrichtung nach einem der vorhergehenden Ansprüche mit einer Harzzuführungseinrichtung (47) zum Ergänzen des flüssigen photohärtenden Harzes (3) in dem Behälter (2), um die Oberfläche des in dem Behälter (2) gespeicherten flüssigen photohärtenden Harzes (3) auf einem konstanten Niveau zu halten.

11. Verfahren zur Herstellung eines dreidimensionalen Objekts aus in einem Behälter (2) gespeichertem flüssigem photohärtendem Harz (3),
mit den Verfahrensschritten:
Applizieren eines Lichtstrahls (21) auf aufeinanderfolgende Schichten des flüssigen photohärtenden Harzes (3), um jede Schicht des flüssigen photohärtenden Harzes (3) in eine verfestigte Schicht aus gehärtetem Harz umzuwandeln, wobei diese Schichten jeweils die Oberseite des in dem Behälter (2) gespeicherten flüssigen photohärtenden Harzes (3) enthalten,
Bewegen der einzelnen nacheinander verfestigten Schichten aus gehärtetem Harz nach unten in das in dem Behälter (2) gespeicherte flüssige photohärtende Harz (3), so daß jede verfestigte Schicht aus gehärtetem Harz mit einer neuen Schicht des flüssigen photohärtenden Harzes (3) bedeckt wird, die dann dem Lichtstrahl (21) ausgesetzt wird, um eine neue verfestigte Schicht aus gehärtetem Harz zu bilden, die auf der in dem flüssigen photohärtenden Harz (3) liegende verfestigte Schicht fest aufgelagert ist, um ein dreidimensionales Objekt (42) aus laminiertem gehärtetem Harz herzustellen,
**gekennzeichnet durch** die Verfahrensschritte:
Detektieren der Temperatur des in dem Behälter (2) gespeicherten flüssigen photohärtenden Harzes (3) und zur Erzeugung eines Detektorausgangssignals,
Erwärmen des in dem Behälter (2) gespeicherten flüssigen photohärtenden Harzes (3) in Abhängigkeit von dem Temperaturdektor-Ausgangssignal, um die Viskosität des in dem Behälter (2) gespeicherten flüssigen photohärtenden Harzes (3) herabzusetzen.

12. Verfahren nach Anspruch 11, bei dem der Behälter (12) elektrisch leitfähiges Material enthält und der Verfahrensschritt des Erwärmens eine Hochfrequenz-Induktionserwärmung des elektrisch leitfähigen Materials umfaßt, wobei in diesem durch elektromagnetische Induktion ein Wirbelstrom erzeugt wird, so daß in dem elektrisch leitfähigen Material Joulsche Wärme erzeugt wird.

13. Verfahren nach Anspruch 11 oder 12, bei dem der Verfahrensschritt des Detektierens der Temperatur des Hartes das Detektieren seiner Temperatur an der Oberseite des Harzes (3) in dem Behälter (2) umfaßt.

14. Verfahren nach Anspruch 11, 12 oder 13, bei dem der Verfahrensschritt des Applizierens des Lichtstrahls folgende Schritte umfaßt:
Erzeugen eines Laserlichtstrahls (21),
Steuern der Intensität des Laserlichtstrahls (21),
Fokussieren des Laserlichtstrahls (21) derart, daß ein vorbestimmter Strahlpunkt auf der Oberfläche des in dem Behälter (2) gespeicherten flüssigen photohärtenden Harzes gebildet wird, und
Veranlassen, daß der Lichtstrahl (21) die Oberfläche des in dem Behälter (2) gespeicherten flüssigen photohärtenden Harzes (3) in einer ersten Abtastrichtung und dann in einer zur ersten Abtastrichtung senkrechten zweiten Abtastrichtung abstastet.

15. Verfahren nach einem der Ansprüche 11 bis 14, mit dem Verfahrensschritt, daß das flüssige photohärtende Harz (3) in dem Behälter (2) so ergänzt wird, daß die Oberfläche des in dem Behälter (2) gespeicherten flüssigen photohärtenden Harzes (3) auf einem konstanten Niveau gehalten wird.

## Revendications

1. Un appareil pour fabriquer un objet tridimensionnel, l'appareil comprenant un récipient (2) destiné à stocker une résine photo-durcissable (3) liquide, un moyen de production de faisceaux lumineux (14) destiné à appliquer un faisceau lumineux (21) sur des couches successives de résine photo-durcissables liquides (3), dont chacune constitue la surface supérieure en résine photodurcissable liquide (3), stockée dans le récipient (2), de manière à faire passer chaque couche en résine photodurcissable liquide (3) à l'état de couche solidifiée, en résine durcie, et comprenant des moyens déplaçables (8, 28), pour déplacer chaque couche successivement solidifiée, en résine durcie, vers le bas, dans la résine photodurcissable liquide (3) stockée dans le récipient (2), de manière que chaque couche solidifiée en résine durcie soit revêtue d'une nouvelle couche de résine photodurcissable liquide (3), qui est ensuite exposée au faisceau lumineux (21) venant du moyen de production du faisceau lumineux (14), de façon à constituer une nouvelle couche solidifiée en résine durcie, superposée rigidement à la couche solidifiée positionnée dans la résine photodurcissable liquide (3), pour constituer un objet tridimensionnel (42), en résine stratifiée, durcie, caractérisé par un moyen de mesure de température (5), destiné à mesurer la température de la résine photodurcissable liquide (3) stockée dans le récipient (2) et émettant un signal de mesure, un moyen de chauffage (4) destiné à chauffer la résine photodurcissable liquide (3) stockée dans le récipient, et un moyen de commande de température (3) destiné à commander le moyen de chauffage (4) d'après le signal de sortie de mesure obtenu depuis le moyen de mesure de température (5), de façon à réduire la viscosité de la résine photodurcissable liquide (3) stockée dans le récipient (2).

2. Un dispositif selon la revendication 1, dans lequel le récipient (2) est constitué au moins partiellement en matériau conducteur de l'électricité.

3. Un dispositif selon la revendication 2, dans lequel le moyen de chauffage (3) comprend un moyen de chauffage par induction à haute fréquence, comprenant des bobines, dans lesquelles un courant de Foucault est produit par induction électromagnétique, ce courant passant dans la matériau conducteur de l'électricité, de manière à provoquer un chauffage par effet Joule de ce matériau conducteur de l'électricité.

4. Un dispositif selon la revendication 1, la revendication 2, ou la revendication 3, dans lequel le moyen de mesure de température (5) est monté sur le récipient (2) et pourvu d'une partie de mesure (6) immergée dans la résine photodurcissable liquide (3) stockée dans le récipient (2).

5. Un dispositif selon l'une quelconque des revendications précédentes, dans lequel un moyen de commande de fonctionnement (31) est prévu, pour commander le moyen déplaçable (8), et le moyen de commande de température (7) étant actionné pour commander le moyen de commande de fonctionnement (31), pour empêcher le démarrage de l'opération de fabrication d'un objet tridimensionnel, lorsque la température de la résine photodurcissable liquide (3) stockée dans le récipient (2) est inférieure à une limite inférieure prédéterminée et pour arrêter l'opération de fabrication d'objets tridimensionnels ,lorsque la température de la liquide photodurcissable (3) stockée dans le récipient (2) est supérieure à une limite supérieure prédéterminée.

6. Un dispositif selon l'une quelconque des revendications précédentes, dans lequel le moyen de production de faisceau lumineux (14) comprend une source de faisceau lumineux (20), destinée à produire un faisceau lumineux laser, un organe de commande de faisceau lumineux (24) destiné à commander l'intensité du faisceau lumineux laser, un dispositif de focalisation (25), équipé d'une lentille de focalisation (26), pour focaliser le faisceau lumineux laser, de manière à constituer un point lumineux de faisceau prédéterminé sur la surface de la résine photodurcissable liquide (3) stockée dans le récipient (2), un premier appareil de balayage à faisceau lumineux (16) comprenant un miroir mobile (19)', destiné à permettre le balayage, par le faisceau lumineux, de la surface de la résine photodurcissable liquide (3) stockée dans le récipient (2), dans une première direction de balayage, un deuxième organe de balayage à faisceau lumineux (15), comprenant un deuxième miroir mobile (19) destiné à produire le balayage par le faisceau lumineux de la surface de la résine photodurcissable liquide (3) stockée dans le récipient (2), dans une deuxième direction de balayage, perpendiculaire à la première direction de balayage, et un moyen de déviation (22, 23), prévu pour diriger le faisceau lumineux laser sur les premier et deuxième miroirs rotatifs, en suivant une trajectoire prédéterminée.

7. Un dispositif selon l'une quelconque des revendications précédentes, dans lequel les moyens mobiles (28) comprennent un dispositif élévateur (78), ayant une partie susceptible d'être montée et abaissée sélectivement dans la résine photodurcissable liquide (3) stockée dans le récipient (2).

8. Un dispositif selon la revendication 7, dans lequel le dispositif élévateur (8) comprend un plan se présentant sous forme de plaque (9), pouvant être immergé dans la résine photodurcissable liquide (3) stockée dans le récipient (2), pour supporter la couche solidifiée de résine durcie, et un moteur pas-à-pas (12) destiné à déplacer le plan en plaque (9), de façon à le faire monter et descendre sélectivement, pas par pas, la valeur du pas étant prédéterminée.

9. Un dispositif selon la revendication 8, dans lequel le moyen déplaçable (8, 28) comprend, en outre, un capteur de position (28), prévu pour détecter la position du dispositif élévateur (8) en direction verticale par rapport à la surface supérieure de la résine et pour produire un signal de sortie de détection de position, et un organe de commande de dispositif élévateur (29), agissant pour commander le moteur pas à pas (12) en fonction du signal de sortie de détection de position venant du capteur de position (28).

10. Un dispositif selon l'une quelconque des revendications précédentes, comprenant un moyen d'amenée de résine (47), prévu pour amener la résine photodurcissable liquide (3) dans le récipient (2), de manière à maintenir la surface de la résine photodurcissable liquide (3) stockée dans le récipient (2) à un niveau constant.

11. Un procédé de fabrication d'un objet tridimensionnel en résine durcie à partir d'une résine photodurcissable liquide (3) stockée dans un récipient (2), le procédé comprenant les étapes d'application d'un faisceau lumineux (21) à des couches successives de résine photodurcissable liquide (3), dont chacune constitue la surface supérieure de la résine photodurcissable liquide stockée dans le récipient (2), de façon à faire passer chaque couche de résine photodurcissable liquide (3) en un état solidifié de résine durcie et à déplacer chaque couche successivement solidifiée de résine durcie vers le bas, dans la résine photodurcissable liquide (3) stockée dans le récipient (2), de manière que chaque couche solidifiée de résine durcie soit revêtue d' une nouvelle couche de résine photodurcissable liquide (3), qui est ensuite exposée au faisceau lumineux (21), de manière à constituer une nouvelle couche solidifiée de résine durcie, superposée rigidement à la couche solidifiée positionnée dans la résine photodurcissable liquide (3), pour constituer un objet tridimensionnel (42) en résine durcie stratifiée, procédé caractérisé par les étapes de mesure de la température de la résine photodurcissable liquide (3) stockée dans le récipient (2) et production d'un signal de sortie de mesure, et chauffage de la résine photodurcissable liquide (3) stockée dans le récipient (2), en fonction du signal de sortie de détection de mesure de température, de façon à diminuer la viscosité de la résine photodurcissable liquide (3) stockée dans le récipient (2).

12. Procédé selon la revendication 11 dans lequel le récipient (2) comprend un matériau conducteur de l'électricité et l'étape de chauffage comprend un chauffage par induction à haute fréquence du matériau conducteur de l'électricité, pour y provoquer des courants de Foucault par induction électromagnétique, donnant un chauffage par effet Joule du matériau conducteur de l'électricité.

13. Un procédé selon la revendication 11 ou la revendication 12, dans lequel l'étape de mesure de la température de la résine comprend la mesure de cette température sur la surface supérieure de la résine (3) dans le récipient (2).

14. Un procédé selon la revendication 11, la revendication 12 ou la revendication 13, dans lequel l'étape d'application d'un faisceau lumineux comprend les étapes de production d'un faisceau lumineux laser (21), commande de l'intensité du faisceau lumineux laser (21), focalisation du faisceau lumineux laser (21) pour obtenir un point lumineux de faisceau prédéterminé sur la surface de la résine photodurcissable liquide stockée dans le récipient (2), et balayage par le faisceau lumineux (21) de la surface de résine photodurcissable liquide (3) stockée dans le récipient (2), dans une première direction de balayage puis dans une deuxième direction de balayage, perpendiculaire à la première direction de balayage.

15. Un procédé selon l'une quelconque des revendications 11 et 14 comprenant l'étape d'alimentation d'appoint en résine photodurcissable liquide (3) se trouvant dans le récipient (2), pour maintenir à un niveau constant la surface de la résine photodurcissable liquide (3) stockée dans le récipient (2).
